# EUROPÄISCHE PATENTANMELDUNG

(11) **EP 1 347 230 A1**
(43) Veröffentlichungstag der Anmeldung: **24.09.2003**
(21) Anmeldenummer: 02006414.3
(22) Anmeldetag: 21.03.2002
(51) Int. Cl.: F16L 59/22

(54) **Thermischer Isolierkörper und Verfahren zu seiner Herstellung**

(71) Anmelder: Armacell Enterprise GmbH, 48153 Münster (DE)
(72) Erfinder: Vogler, Manfred, 88167 Maierhöfen (DE); Singer, Anton, 88299 Leutkirch (DE)
(74) Vertreter: Finck, Dieter, Dr.Ing.

(57) **Zusammenfassung**

Der thermische Isolierkörper hat eine Außenform (21) und eine hohle Innenform (23) für die Aufnahme eines zu isolierenden Bauteils (3, 4, 4a). Der Isolierkörper ist aus Schichten in Form von Plattenelementen (5 bis 8, 5a bis 8a) zusammengesetzt und in mindestens zwei Montageabschnitte (1, 1a) unterteilt. Die Außenform (21) ergibt sich durch äußere ebene oder gekrümmte Begrenzungsflächen der äußeren Plattenelemente und durch Außenränder mit ebenen oder gekrümmt verlaufenden Randabschnitten. Die hohle Innenform (23) ergibt sich aus der ebenen oder entsprechend vertieften, dem Bauteil (3) zugeordneten Fläche eines Plattenelements und aus den Rändern (17, 18, 19) mit ebenen und/oder gekrümmten Randabschnitten, deren über die Dicke verlaufende Mantellinien gerade oder gekrümmt sein können.

## Beschreibung

Die Erfindung betrifft einen thermischen Isolierkörper für ein Fluid leitendes Bauteil, wobei der Isolierkörper eine vorgegebene Außenform aufweist, eine dem Bauteil für seine lagefixierte Aufnahme angepasste hohle Innenform mit Ausnehmungen für die Anschlussstücke hat, aus einem vorgegebenen Isoliermaterial besteht und in wenigstens zwei Montageabschnitte aufgeteilt ist.

Die Erfindung bezieht sich ferner auf ein Verfahren zur Herstellung eines thermischen Isolierkörpers aus einem vorgegebenen Isoliermaterial mit wenigstens zwei Montageabschnitten, in denen eine hohle Innenform für die lagefixierte Aufnahme eines mit Anschlussstücken für Fluidleitungen versehenen Bauteils ausgebildet wird, wobei die Außenform des aus den wenigstens zwei Montageabschnitten zusammengesetzten Isolierkörpers abhängig von den Betriebsbedingungen und den Abmessungen des Bauteils sowie den Eigenschaften des Isoliermaterials bestimmt wird.

Bekanntlich werden heiße oder kalte Fluide fördernde Rohrleitungen isoliert, um die Wärme- bzw. Kälteverluste zu reduzieren und um die Kondensation von Luftfeuchtigkeit zu unterbinden. Abhängig vom Durchmesser erfolgt die Isolierung unter Verwendung eines an die vorliegenden Betriebsbedingungen angepassten flexiblen Isoliermaterials, das aus in Längsrichtung aufgeschnittenen Schläuchen oder aus Platten besteht.

Zu den Rohrsystemen gehören verformte Fluidleitungen, Bögen, Abzweigungen, Ventile, Flansche, Muffen, Pumpen mit Anschlussstücken für Fluidleitungen und/oder mit mechanischen/statischen Anschlussstücken usw.. Bögen mit bestimmten Durchmessern/Radiuskombinationen können nur bei Verwendung von flexiblen elastomeren oder dünnen PE Dämmmaterialien wie gerade Rohre isoliert werden. Kleine Bögen mit kleinen Radien, Pressfittinge, Sonderbögen, Abzweigungen, Ventile, Gehäuse oder andere Systemelemente müssen zeitaufwändig durch Zuschneiden aus geeignetem Schlauch- oder Plattenmaterial und entsprechende Fixierung vor Ort fachgerecht isoliert werden.

Für genormte Rohrsystemteile der erwähnten Art gibt es bereits vorgefertigte Formstücke aus Polyethylen, Zuschnitte aus Elastomermaterial, in Hälften geteilte Bögen aus Polyethylen oder Polyurethan, welche aber in den meisten Fällen immer nur für einen speziellen Einsatzbereich und für eine spezielle Anwendung geeignet sind.

Die der Erfindung zugrundeliegende Aufgabe besteht deshalb darin, einen thermischen Isolierkörper der eingangs beschriebenen Art sowie ein Verfahren zu seiner Herstellung bereitzustellen, mit dem unabhängig davon, ob das Isoliermaterial starr oder flexibel ist, also beispielsweise aus Elastomer, Polystyrol, Polyurethan usw. oder Zusammensetzungen davon besteht, und unabhängig von der Form und Größe des zu isolierenden Bauteils, und unabhängig vom Einsatzbereich der Isolierung (Kälte, Wärme), eine einfache Anfertigung und eine problemlose Montage ermöglicht wird.

Diese Aufgabe wird ausgehend von dem thermischen Isolierkörper der eingangs genannten Art durch eine Vielzahl von planparallelen Plattenelementen aus dem Isoliermaterial mit einem Außenrand und einem Innenrand gelöst, die so gestaltet sind, dass bei entsprechender Zusammenfügung der Plattenelemente zu den Montageabschnitten die Außenränder einen Teil der Außenform und die Innenränder einen Teil der hohlen Innenform begrenzen, wobei jeder Rand aus aneinandergrenzenden, ebenen Randabschnitten und/oder gekrümmten Randabschnitten mit über die Dicke verlaufenden Mantellinien zusammengesetzt ist, wobei der andere Teil der Außenform von der ebenen oder gekrümmten Außenfläche der äußeren Plattenelemente gebildet wird und wobei der andere Teil der hohlen Innenform von einer einer Randausbildung entsprechenden Vertiefung in der Innenfläche oder von der Innenfläche der entsprechenden Plattenelemente gebildet wird.

Wenn eine sehr passgenaue Anpassung an die gekrümmte Form des Bauteils gewünscht ist, sind die über die Dicke der Plattenelemente verlaufenden Mantellinien der Randabschnitte entsprechend gekrümmte Mantellinien. Soweit Optik oder Funktion der Außenform dies erfordern, können die über die Dicke der Plattenelemente verlaufenden Mantellinien der Randabschnitte entsprechend gekrümmte Mantellinien sein.

Wenn die an den Isolierkörper gestellten Anforderungen eine gröbere Passgenauigkeit zulassen, sind die über die Dicke der Plattenelemente verlaufenden Mantellinien der Randabschnitte gerade Mantellinien. In der Regel ist dies dann eine stufenförmige Anpassung an die Abmessungen des Bauteils.

Dabei können die geraden Mantellinien der Randabschnitte in einem Winkel zu den großen Plattenoberflächen geneigt sein, der einer optimalen lokalen Annäherung an die Kontur des Bauteils entspricht.

Jedes Plattenelement kann eine die Ausbildung der geraden Mantellinien der Randabschnitte zulassende Dicke haben. In diesem Fall wird unter Berücksichtigung von Anpassungsoptimierungen die Plattendicke so gewählt, dass die Randabschnitte mit geraden Mantellinien ausgebildet werden können.

Besonders bevorzugt wird eine im Wesentlichen gleiche Dicke der Plattenelemente.

Der erfindungsgemäße Isolierkörper erlaubt die Verarbeitung sowohl flexibler als auch starrer Isolationsmaterialien und ermöglicht ein mehr oder weniger passgenaue Isolierung von Bauteilen auch mit komplizierten Geometrien, wobei eine mechanische Nachbearbeitung der Konturen, Übergangsstellen und Aussparungen usw. problemlos durchgeführt werden kann. Dabei können auch spezielle Anforderungen berücksichtigt werden, beispielsweise eine blockförmige Kontur der Außenform, Überlappungen bei Kälteisolierungen mit Polyurethan und dergleichen. Die Montageteile können mit einem Scharnier, beispielsweise in Form eines Klebebands aneinander befestigt werden und durch einen Verschluss am Bauteil montiert werden, der selbstklebend, form- oder kraftschlüssig ausgelegt ist. Dadurch kann der Zeitaufwand für die Isolierung der Bauteile in unterschiedlichster Ausgestaltung auf einen Bruchteil der bisher erforderlichen Zeit reduziert werden. Die Montageteile lassen sich praktisch spannungsfrei herstellen, wodurch Probleme hinsichtlich Schrumpfung, Passgenauigkeit, Toleranzen, sowie Öffnung der Klebenaht Luft vermieden werden.

Durch entsprechende Auslegung der Anschlussstellen wird die Zirkulation von mit Wasserdampf gesättigter Luft unterbunden.

Der thermische Isolierkörper lässt sich bei dem Verfahren der eingangs genannten Art dadurch herstellen, dass er aus parallelen Plattenelementen aus dem Isoliermaterial zusammengesetzt wird, wobei an jedem Plattenelement ein dem einen Teil der Außenform entsprechender Außenrand ausgebildet wird, während als anderer Teil der Außenform die ebene Außenfläche eines äußeren Plattenelements verwendet wird, der gegebenenfalls durch Bearbeitung auch eine Krümmung aufgeprägt werden kann, und wobei in jedem Plattenelement ein dem einen Teil der hohlen Innenform entsprechender Innenrand ausgebildet wird, während als der andere Teil der Innenform eine einer Randausbildung entsprechend ausgesparte Vertiefung in der Innenfläche eines angrenzenden Plattenelements oder dessen Innenfläche verwendet wird, wobei jeder Rand durch Materialabtragung, Materialabspaltung oder Materialbehandlung so geformt wird, dass er sich aus ebenen Randabschnitten und/oder gekrümmten Randabschnitten zusammensetzt, deren Mantellinien sich über die Dicke der Plattenelemente erstrecken, und dass die so ausgebildeten Plattenelemente zur Bildung der Montageabschnitte aufeinandergelegt und miteinander verbunden werden.

Bei dem erfindungsgemäßen Verfahren wird somit der Isolierkörper aus außen und innen entsprechend geformten Materialschichten an der Montagestelle oder vorher in Form von wenigstens zwei Montageabschnitten zusammengesetzt, wobei die Schichten aus Plattenelementen aus Dämmmaterialien, wie z.B. Polyurethan, Polystyrol, Polyethylen oder Elastomere, sowie Zusammensetzungen davon hergestellt werden und die Kontur der Innenform optimal an die Außenkontur des zu isolierenden Bauteils angepasst werden kann. Die Zuordnung der Hauptebenen der Schichten bezüglich des Bauteils erfolgt im Hinblick auf eine Minimalzahl von Montagestücken, Minimierung des Materialabtrags und dergleichen.

Bei dem erfindungsgemäßen Verfahren können ausgehend von in einen Rechner eingegebenen Daten für die Abmessungen des Bauteils und für die Dicke der Plattenelemente, die vorgegeben oder vom Rechner durch einen Optimierungsprozess ermittelt werden, die ebenen Randabschnitte und/oder gekrümmten Randabschnitte mit einem rechnergesteuerten Werkzeug, das längs einer sich über die Dicke erstreckenden Mantellinie Material entfernend wirkt, so ausgebildet werden, dass bei aufeinandergelegten Plattenelementen die Innenränder eine Innenform, die eine einfache passgenaue Annäherung an die Außenabmessungen des Bauteils ist, und die Außenränder eine geometrisch einfache Außenform unter Berücksichtigung der vorgegebenen oder vom Rechner ermittelten minimalen Isolierstärke ergeben.

Zweckmäßigerweise werden die Innenränder und Außenränder der Plattenelemente mit sich über ihre Dicke erstreckenden geraden Mantellinien beispielsweise durch Stanzen, Fräsen, Sägen, beispielsweise durch Band-Nibrationssägen, Heißdrahtschneiden oder durch Wasser-, Plasma- oder Laserstrahl ausgebildet.

Wenn die Innenränder und Außenränder der Plattenelemente sich über ihre Dicke erstreckende gekrümmte Mantellinien haben, werden sie vorteilhafterweise durch Fräsen, Heißdraht und Band-/Vibrationssägen ausgebildet, wobei die Form des Fräsers, des Heißdrahtes oder des Sägeblatts oder Sägebandes an die Krümmung der Mantellinie entsprechend angepasst ist.

Mit dem erfindungsgemäßen Verfahren lässt sich eine hohe Reproduzierbarkeit durch Stanzwerkzeuge oder CNC-gesteuerte Fertigung bei geringen Maßtoleranzen und hoher Passgenauigkeit erreichen. Dabei ist die Formenvielfalt der zu isolierenden Bauteile nicht begrenzt. Trotzdem werden keine aufwändigen Werkzeuge nötig, wie dies beispielsweise beim Formschäumen der Fall wäre. Die zwischen Isolierkörper und Bauteil eingeschlossenen Luftmengen lassen sich bei wirtschaftlich vertretbarem Herstellungsaufwand minimieren. Dabei ist es möglich, die Anschlussstellen zum Rohr weitgehend abzudichten.

Anhand von Zeichnungen wird eine beispielsweise Ausführungsform der Erfindung näher erläutert. Es zeigt:
- Fig. 1: perspektivisch aufgeklappt einen Isolierkörper für ein Bauteil mit Anschlussstücken in Form eines Winkelfittings,
- Fig. 2: eine Draufsicht auf den aufgeklappten Isolierkörper von Fig. 1,
- Fig. 3: eine Seitenansicht des Isolierkörpers von Fig. 1,
- Fig. 4: eine Vorderansicht des Isolierkörpers von Fig. 1,
- Fig. 5: den Schnitt A-A von Fig. 2,
- Fig. 6: den Schnitt B-B von Fig. 2,
- Fig. 7: den Schnitt C-C von Fig. 2,
- Fig. 8: in einer geschnittenen Teilansicht vier Plattenelemente mit gerader Mantellinie der Innenform und Außenform,
- Fig. 9: in einer Ansicht wie Fig. 8 vier Plattenelemente mit gekrümmten Mantellinien der Innenform und Außenform,
- Fig. 10: in einer Ansicht wie Fig. 8 vier Plattenelemente mit lotrechten Mantellinien der Innenform und
- Fig. 11: in einer Ansicht wie Fig. 1 den Isolierkörper mit einer Schichtung zum linearen System radial verlaufenden Ebenen.

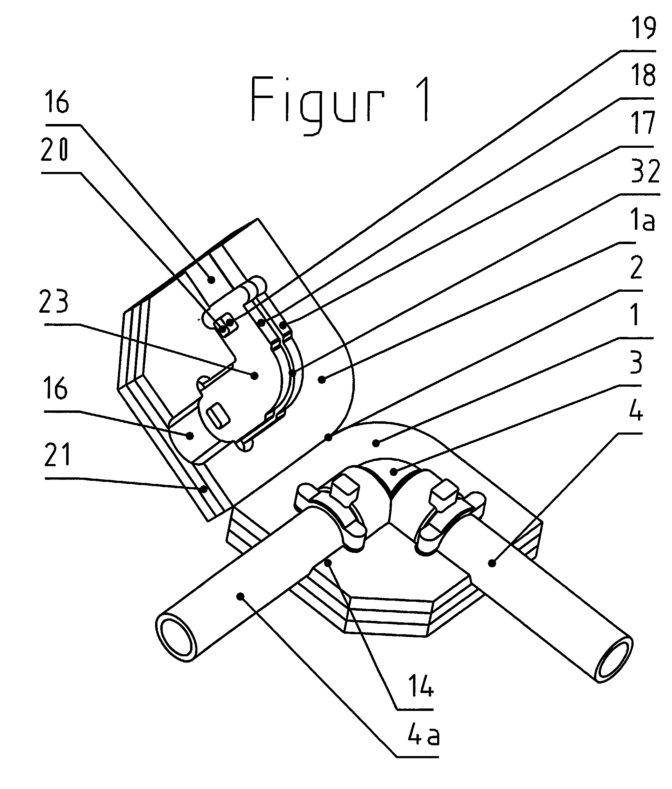

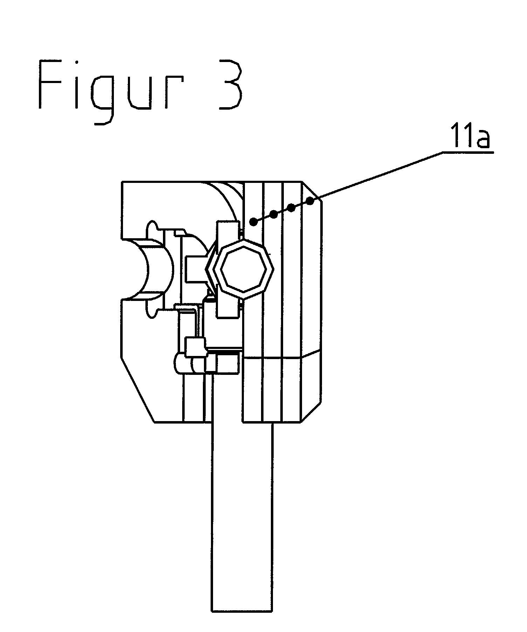

Der in Fig. 1 bis 7 gezeigte Isolierkörper besteht aus zwei Montageabschnitten 1 und 1a, die miteinander durch ein Scharnier 2 verbunden sind, so dass sie von der gezeigten Offenstellung in eine Schließstellung geklappt werden können, in der ein zu isolierendes Bauteil 3 in Form eines Rohrkrümmers mit Anschlussstücken 4 und 4a abdichtend umschlossen ist.

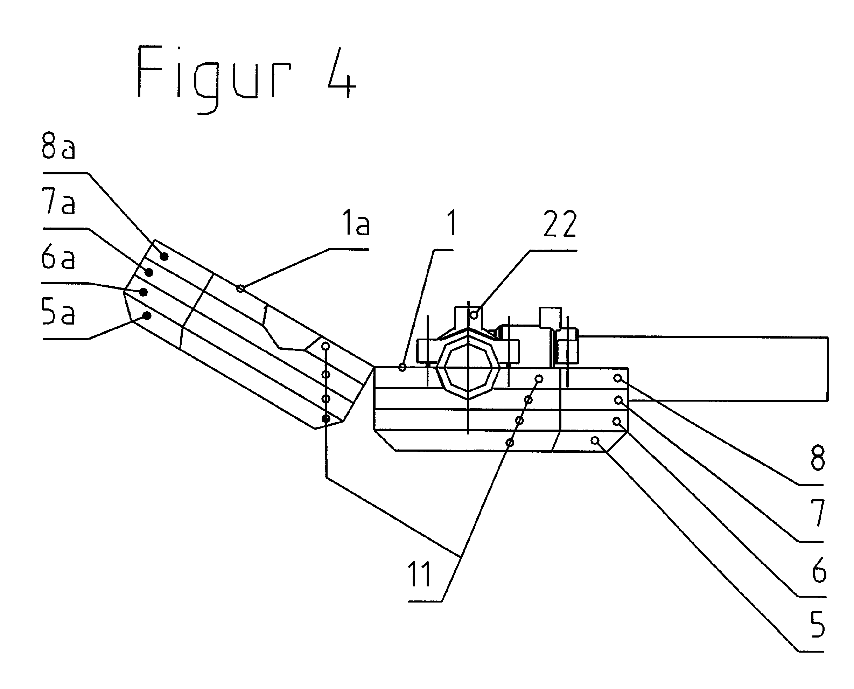

Der Montageabschnitt 1 ist, wie in Fig. 4 zu sehen ist, aus Plattenelementen 5, 6, 7 und 8 gleicher Dicke zusammengesetzt, während der Montageabschnitt 1a aus gleich dicken Plattenelementen 5a, 6a, 7a, 8a besteht.

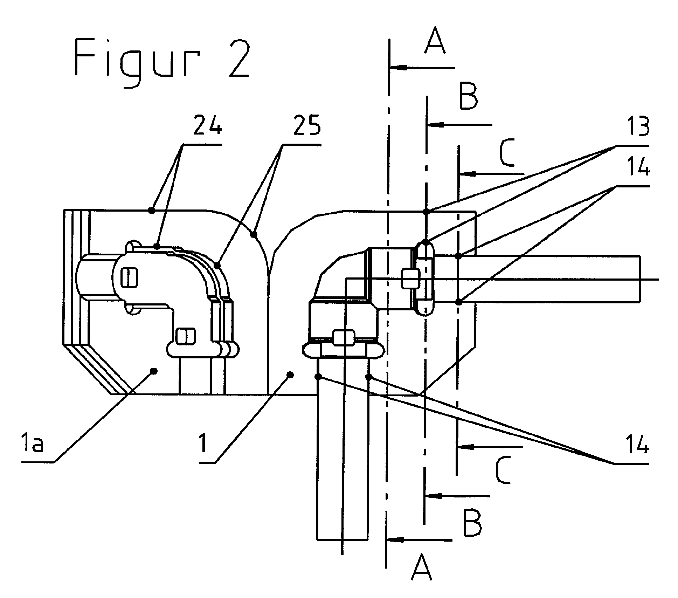

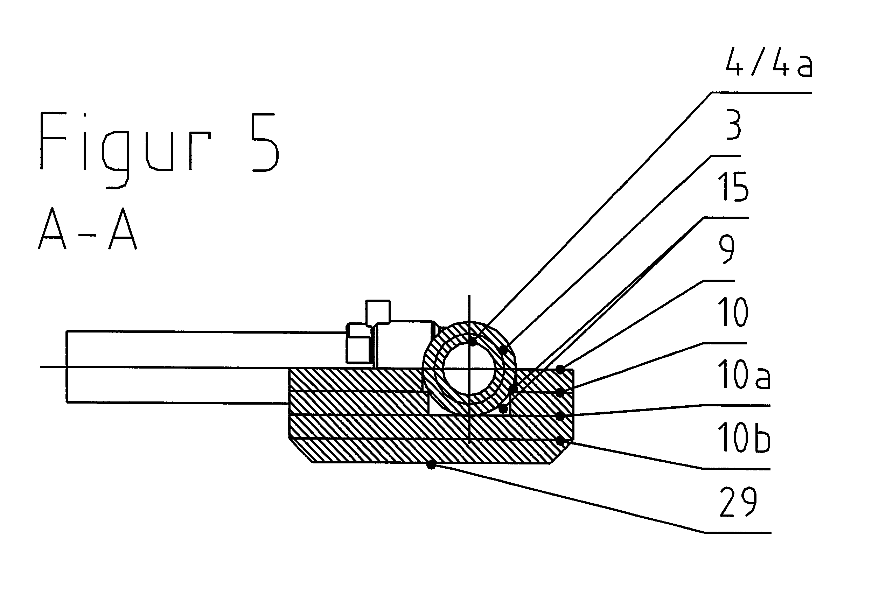

Jedes der Plattenelemente 5 bis 8 bzw. 5a bis 8a hat einen Außenrand 11 bzw. 11 a, der aus gekrümmten Randabschnitten 25 und ebenen Randabschnitten 24 zusammengesetzt ist, wobei an den äußeren Plattenelementen 5 und 5a Abschrägungen 12 und 12a vorgesehen sind. Die Plattenelemente 5 bis 8 bzw. 5a bis 8a liegen mit ihren planen Hauptoberflächen 10, 10a und 10b (Fig. 5) aufeinander. Die minimale Isolierstärke 13 ist in Fig. 2 gezeigt und ergibt sich aufgrund entsprechender thermischer Berechnungen ausgehend von den Betriebsbedingungen und den Eigenschaften des Isoliermaterials.

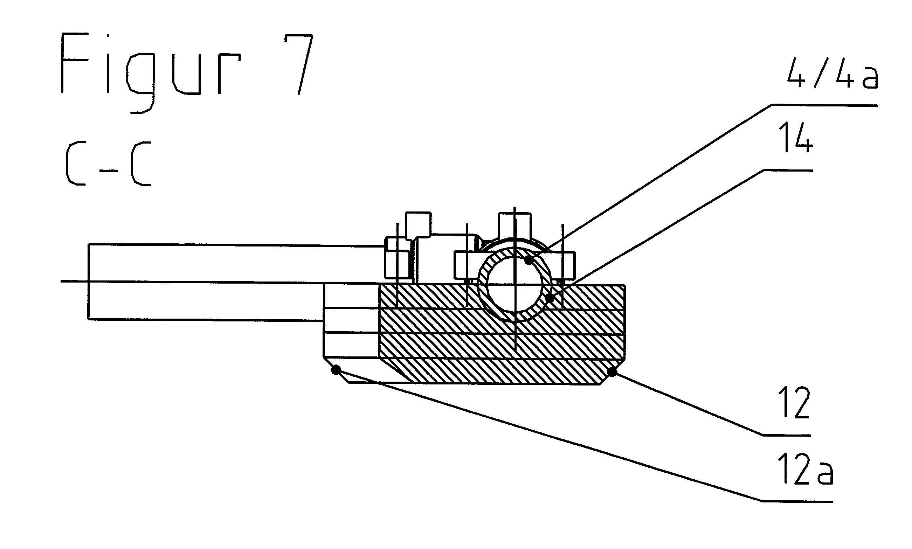

Die den Isolierkörper bildenden Plattenelemente 5 bis 8 und 5a bis 8a haben im Bereich der Anschlussstücke 4 und 4a eine hohle Innenform 23, von der eine Hälfte in Fig. 1 gezeigt ist und die für einen abdichtenden Sitz (14) um die Anschlussstücke 4 bzw. 4a angepasst ist (Fig. 7).

Bei dem gezeigten Ausführungsbeispiel sind in der dem Bauteil 3 zugewandten ebenen Innenfläche des Plattenelements 7 Vertiefungen 20 für die Aufnahme eines bauteilseitigen elektrischen Anschlusses 22 ausgebildet.

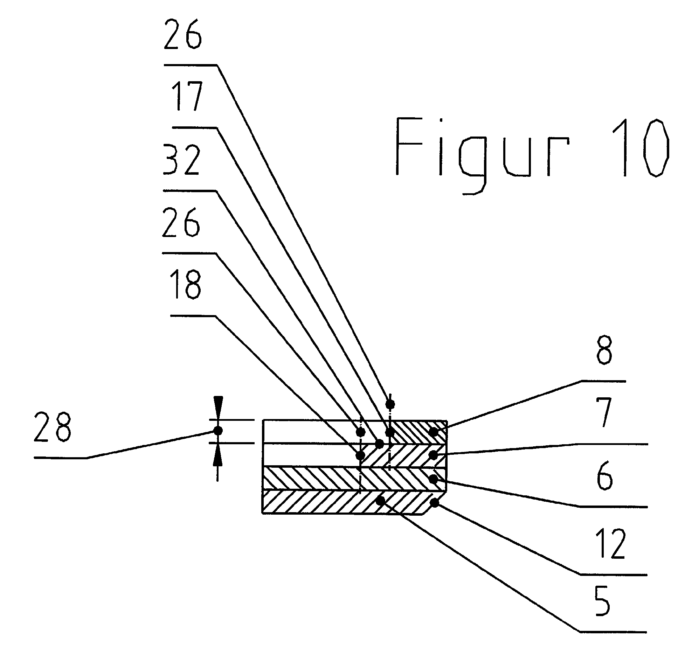

Wie aus Fig. 1 und 4 zu sehen ist, hat das Plattenelement 8 einen Innenrand 17, das Plattenelement 7 einen Innenrand 18 und das Plattenelement 6 einen Innenrand 19. Die Innenränder setzen sich aus ebenen und gekrümmten Randabschnitten zusammen, die aneinandergrenzen und jeweils im Wesentlichen senkrecht zu den Hauptflächen 10, 10a und 10b der Plattenelemente verlaufen. Die Innenränder 17 und 18 bzw. 18 und 19 bilden zwischen sich horizontale Schultern 32 (Fig. 1 und 10), deren Erstreckung in Anpassung an die Form des Bauteils 3 und des zulässigen, von Luft gefüllten Freiraums 15 (Fig. 5) festgelegt ist.

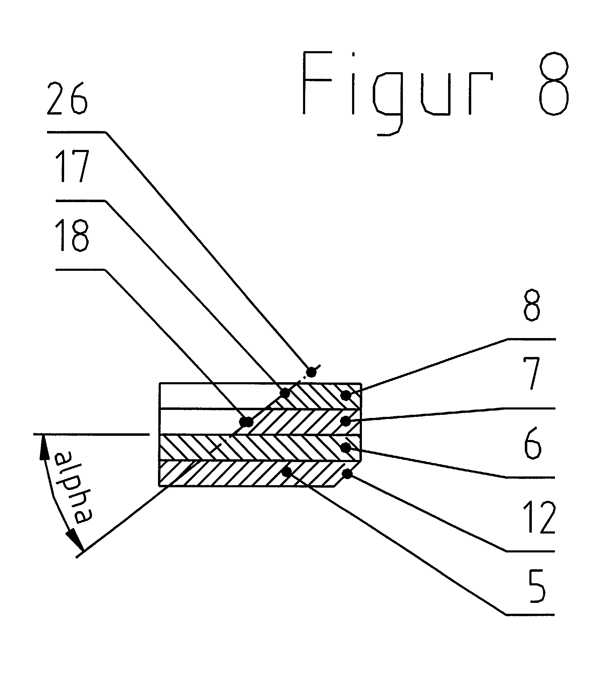

Wie in Fig. 8 gezeigt ist, haben die gleich dicken Plattenelemente 7 und 8 einen Innenrand 18 bzw. 17, der ebene und gekrümmte Randabschnitte aufweist und sich aus geraden Mantellinien 26 zusammensetzt, die in Fig. 8 zu den Hauptflächen der Plattenelemente 7 und 8 unter einem Winkel α geneigt sind. Diese Randabschnitte mit gerader Mantellinie 26 können beispielsweise mit Hilfe eines Wasserstrahls oder durch Heißdrahtschneiden hergestellt werden.

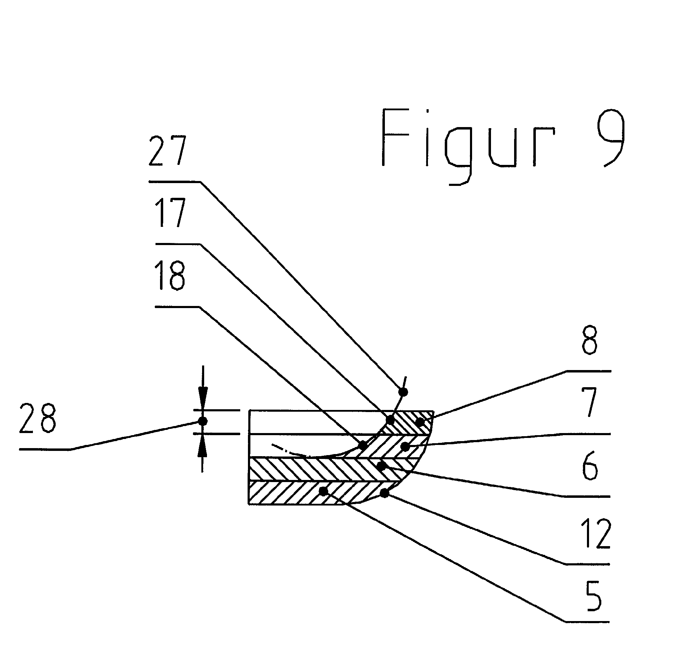

In der Ausgestaltung von Fig. 9 haben die beiden Plattenelemente 7 und 8 jeweils die gleiche Dicke 28. Ihre Innenränder 18 bzw. 17 bilden Randabschnitte, die von gekrümmten Mantellinien 27 gebildet werden, wie sie beispielsweise von einem Fräser mit einer im Querschnitt elliptischen Außenkontur erzeugt werden können. Die Außenränder 11 werden von gekrümmten Mantellinien 12 gebildet und könne beispielsweise von einem Fräser mit einer im Querschnitt elliptischen Außenkontur oder durch ein bogenförmig geführtes Bandmesser erzeugt werden.

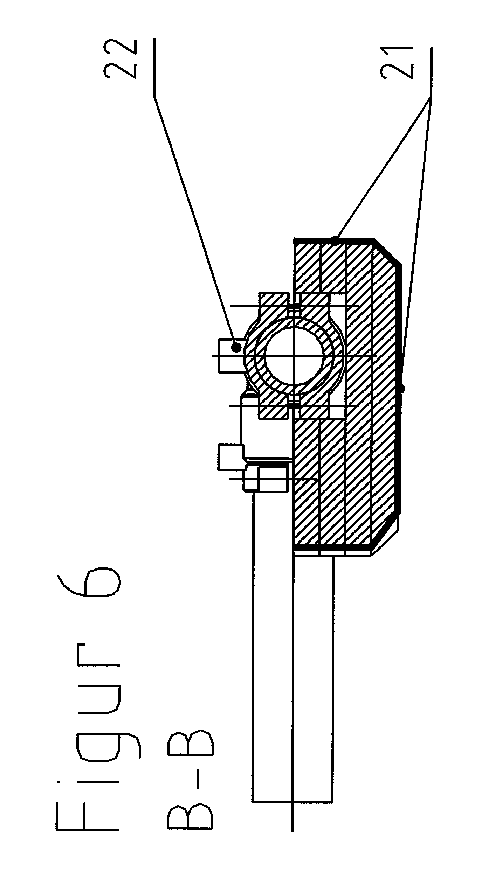

Je nach Wahl der Dicke 28 der Plattenelemente 7 und 8 und der Ausgestaltung der entsprechenden Innenränder 18 bzw. 17 aufgrund entsprechend gewählter Mantellinien 26 bzw. 27, lässt sich jede denkbare Innenkontur der Innenform 23 verwirklichen. Die Außenform 21 (Fig. 6) kann äußerst einfach, beispielsweise blockförmig, ausgeführt werden.

Die Plattenelemente 5 bis 8 bzw. 5a bis 8a werden mit ihren Hauptflächen 10, 10a und 10b aufeinandergelegt und beispielsweise miteinander verklebt, wodurch die zwei Montageteile 1 und 1a gebildet werden, die durch das Scharnier 2, beispielsweise ein Klebeband, verbunden sind. Die Montageteile 1a und 1 werden mit ihren Trennflächen 9 (Fig. 5) aufeinandergelegt, die beispielsweise einen Selbstklebeverschluss aufweisen können.

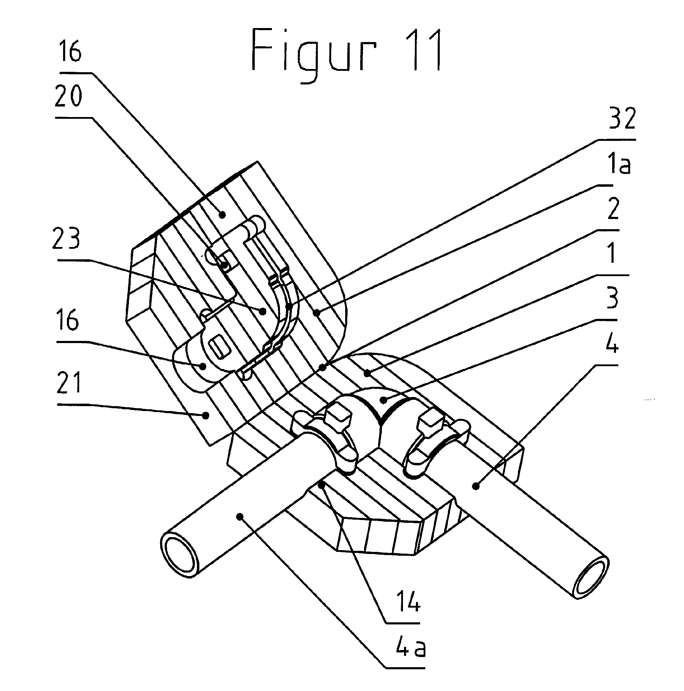

Bei dem gezeigten Ausführungsbeispiel erstrecken sich die Plattenelemente in zum linearen System axial verlaufenden Ebenen. Diese Schichtung kann jedoch auch in zum linearen System radial verlaufenden Ebenen vorgenommen werden, wie in Fig. 11 gezeigt ist.

Anstelle von Plattenelementen mit gleicher Dicke können für beide Verläufe der Ebenen auch solche mit unterschiedlicher Dicke eingesetzt werden. Dabei wird die jeweilige Dicke abhängig von einer optimierten Anpassung der Innenränder an die Bauteilform ausgewählt.

## Patentansprüche

1. Thermischer Isolierkörper für ein Fluid leitendes Bauteil (3),
wobei der Isolierkörper
- eine vorgegebene Außenform (21) aufweist,
- eine dem Bauteil (3) für seine lagefixierte Aufnahme angepasste hohle Innenform (23) mit Ausnehmungen (16) für die Anschlussstücke (4, 4a) hat,
- aus einem vorgegebenen Isoliermaterial besteht und
- in wenigstens zwei Montageabschnitte (1, 1a) aufgeteilt ist
**gekennzeichnet durch**
- eine Vielzahl von planparallelen Plattenelementen (5, 6, 7, 8, 5a, 6a, 7a, 8a) aus dem Isoliermaterial mit einem Außenrand (11, 11a) und einem Innenrand (17, 18, 19),
- die so gestaltet sind, dass bei entsprechender Zusammenfügung der Plattenelemente (5, 6, 7, 8, 5a, 6a, 7a, 8a) zu den Montageabschnitten (1, 1a) die Außenränder (11, 11a) einen Teil der Außenform (21) und die Innenränder (17, 18, 19) einen Teil der hohlen Innenform (23) begrenzen,
- wobei jeder Rand (17, 18, 19, 20) aus aneinandergrenzenden, ebenen Randabschnitten (24) und/oder gekrümmten Randabschnitten (25) mit über die Dicke (28) verlaufenden Mantellinien (26, 27) zusammengesetzt ist,
- wobei der andere Teil der Außenform (21) von der ebenen oder gekrümmten Außenfläche (29) der äußeren Plattenelemente (5, 5a) gebildet wird und
- wobei der andere Teil der hohlen Innenform (23) von einer einer Randausbildung entsprechenden Vertiefung in der Innenfläche oder von der Innenfläche der entsprechenden Plattenelemente (7, 7a) gebildet wird.

2. Isolierkörper nach Anspruch 1, **dadurch gekennzeichnet, dass** die über die Dicke (28) der Plattenelemente (7, 8, 7a, 8a) verlaufenden Mantellinien der Randabschnitte (24, 25) gekrümmte Mantellinien (27) sind.

3. Isolierkörper nach Anspruch 1, **dadurch gekennzeichnet, dass** die über die Dicke (28) der Plattenelemente verlaufenden Mantellinien der Randabschnitte (24, 25) gerade Mantellinien (26) sind.

4. Isolierkörper nach Anspruch 3, **dadurch gekennzeichnet, dass** die geraden Mantellinien (26) der Randabschnitte (24, 25) in einem Winkel (α) zu den großen Plattenoberflächen (10, 10a, 10b) geneigt sind, der einer optimalen lokalen Annäherung an die Kontur des Bauteils (3) entspricht.

5. Isolierkörper nach Anspruch 3 oder 4, **dadurch gekennzeichnet, dass** jedes Plattenelement (7, 8, 7a, 8a) eine die Ausbildung der geraden Mantellinien (26) der Randabschnitte (24, 25) zulassende Dicke (28) hat.

6. Isolierkörper nach einem der Ansprüche 1 bis 4, **dadurch gekennzeichnet, dass** die Plattenelemente (5, 6, 7, 8, 5a, 6a, 7a, 8a) im Wesentlichen gleiche Dicke (28) haben.

7. Verfahren zur Herstellung eines thermischen Isolierkörpers aus einem vorgegebenen Isoliermaterial mit wenigstens zwei Montageabschnitten (1, 1a), in denen eine hohle Innenform (23) für die lagefixierte Aufnahme eines Fluid leitenden Bauteils (3) ausgebildet wird, wobei die Außenform (21) des aus den wenigstens zwei Montageabschnitten (1, 1a) zusammengesetzten Isolierkörpers abhängig von den Betriebsbedingungen und den Abmessungen des Bauteils (3) sowie den Eigenschaften des Isoliermaterials bestimmt wird,
**dadurch gekennzeichnet, dass** der Isolierkörper aus parallelen Plattenelementen (5, 6, 7, 8, 5a, 6a, 7a, 8a) aus dem Isoliermaterial zusammengesetzt wird,
- wobei an jedem Plattenelement (5, 6, 7, 8, 5a, 6a, 7a, 8a) ein dem einen Teil der Außenform (21) entsprechender Außenrand (11, 11a) ausgebildet wird, während als anderer Teil der Außenform (21) die ebene Außenfläche (29) eines äußeren Plattenelements (5, 5a) verwendet wird, und
- wobei in jedem Plattenelement (7, 8, 7a, 8a) ein dem einen Teil der hohlen Innenform (23) entsprechender Innenrand (17, 18, 19) ausgebildet wird, während als der andere Teil der Innenform (23) eine einer Randausbildung entsprechend ausgesparte Vertiefung in der Innenfläche eines angrenzenden Plattenelements (7, 7a) oder dessen Innenfläche (21) verwendet wird,
- wobei jeder Rand (17, 18, 19, 20) durch Materialabtragung oder Materialbehandlung so geformt wird, dass er sich aus ebenen Randabschnitten (24) und/oder gekrümmten Randabschnitten (25) zusammensetzt, deren Mantellinien sich über die Dicke (28) der Plattenelemente (7, 8, 7a, 8a) erstrecken, und
- dass die so ausgebildeten Plattenelemente (5, 6, 7, 8, 5a, 6a, 7a, 8a) zur Bildung der Montageabschnitte (1, 1a) aufeinandergelegt und miteinander verbunden werden.

8. Verfahren nach Anspruch 7, **dadurch gekennzeichnet, dass** ausgehend von in einen Rechner eingegebenen Daten für die Abmessungen des Bauteils (3) und für die Dicke (28) der Plattenelemente (5, 6, 7, 8, 5a, 6a, 7a, 8a), die vorgegeben oder vom Rechner durch einen Optimierungsprozess ermittelt werden, die ebenen Randabschnitte (24) und/oder gekrümmten Randabschnitte (25) mit einem rechnergesteuerten Werkzeug, das längs einer sich über die Dicke (28) erstreckenden Mantellinie (26, 27) wirkt, so ausgebildet werden, dass bei aufeinandergelegten Plattenelementen (5, 6, 7, 8, 5a, 6a, 7a, 8a) die Innenränder (17, 19, 19) eine Innenform (23), die eine einfache passgenaue Annäherung an die Außenabmessungen des Bauteils (3) ist, und die Außenränder (11, 11a) eine geometrisch einfache Außenform (21) unter Berücksichtigung der vorgegebenen oder vom Rechner ermittelten minimalen Isolierstärke (13) ergeben.

9. Verfahren nach Anspruch 7 oder 8, **dadurch gekennzeichnet, dass** die Innenränder (17) und Außenränder der Plattenelemente (7) mit sich über ihre Dicke (28) erstreckenden geraden Mantellinien (26) durch Stanzen, Fräsen, Sägen, Heißdrahtschneiden oder durch Wasser- oder Laserstrahl ausgebildet werden.

10. Verfahren nach Anspruch 7 oder 8, **dadurch gekennzeichnet, dass** die Innenränder (17) der Plattenelemente (7) mit sich über ihre Dicke (28) erstreckenden gekrümmten Mantellinien (27) durch Fräsen, Heißdraht oder Band-/Vibrationssägen ausgebildet werden.

11. Verfahren nach Anspruch 7 oder 8, **dadurch gekennzeichnet, dass** die Außenränder (11, 11a) der Plattenelemente (5, 6, 7, 8) mit sich über ihre Dicke (28) erstreckenden gekrümmten Mantellinien (12) durch Fräsen, Heißdraht und Band-/Vibrationssägen oder identisch wirkenden Bearbeitungsverfahren ausgebildet werden.
